# EUROPÄISCHE PATENTANMELDUNG

(11) **EP 4 282 273 A2**
(43) Veröffentlichungstag der Anmeldung: **29.11.2023**
(21) Anmeldenummer: 23155847.9
(22) Anmeldetag: 09.02.2023
(51) Int. Cl.: A21B 3/15, F24C 15/16

(54) **OFENVORRICHTUNG**

(30) Priorität: 25.05.2022 EP 22382497
(71) Anmelder: BSH Hausgeräte GmbH, 81739 München (DE)
(72) Erfinder: Lorenzo Asensio, Ana, 50016 Zaragoza (ES); Val Andres, Adrian, 50007 Zaragoza (ES); Galindo Perez, Juan Jose, 50007 Zaragoza (ES); Castillo Bergad, Esther, 50018 Zaragoza (ES)

(57) **Zusammenfassung**

Die Erfindung geht aus von einer Ofenvorrichtung, insbesondere einer Ofeneinschubvorrichtung, mit zumindest einem Gargutträger (22), der eine Antihaftbeschichtung (24) aufweist.

Um eine verbesserte Haltbarkeit zu erreichen, wird vorgeschlagen, dass die Ofenvorrichtung eine Schutzeinheit (30) aufweist, die dazu vorgesehen ist, die Antihaftbeschichtung (24) während eines Gebrauchs zu schützen

## Beschreibung

Die Erfindung betrifft eine Ofenvorrichtung nach dem Oberbegriff des Anspruchs 1.

Aus dem Stand der Technik sind Ofenvorrichtungen, insbesondere in Form von Backblechen, mit einer Antihaftbeschichtung bekannt.

Die Aufgabe der Erfindung besteht insbesondere, aber nicht beschränkt darauf, darin, eine gattungsgemäße Vorrichtung mit verbesserten Eigenschaften hinsichtlich einer höheren Haltbarkeit der Ofenvorrichtung bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Die Erfindung geht aus von einer Ofenvorrichtung, insbesondere einer Ofeneinschubvorrichtung, mit zumindest einem Gargutträger, der eine Antihaftbeschichtung aufweist.

Es wird vorgeschlagen, dass die Ofenvorrichtung eine Schutzeinheit aufweist, die dazu vorgesehen ist, die Antihaftbeschichtung während eines Gebrauchs, insbesondere vor einer Beschädigung, zu schützen.

Durch eine derartige Ausgestaltung kann insbesondere eine verbesserte Haltbarkeit erreicht werden. Insbesondere kann ein Zerkratzen der Antihaftbeschichtung oder eine thermische Schädigung der Antihaftbeschichtung, durch die die Antihaftbeschichtung sich von dem Gargutträger löst oder durch die die Anti-Haft-Wirkung verloren geht, verhindert werden.

Unter einer "Ofenvorrichtung" soll insbesondere ein Teil, insbesondere eine Unterbaugruppe, eines Ofens, insbesondere eines Backofens, alternativ eines Mikrowellenofens und/oder eines Grills, verstanden werden. Insbesondere weist der Ofen zumindest eine Ofenmuffel auf, die einen Garraum umgibt. Vorzugsweise weist der Ofen eine Ofentür auf, die dazu vorgesehen ist, den Garraum zu verschließen. Der Ofen kann zumindest ein Heizelement oder eine Vielzahl von Heizelementen aufweisen, die dazu vorgesehen sind, den Garraum, insbesondere in unterschiedlichen Betriebsmodi zu erhitzen. Insbesondere ist der Ofen als Elektroofen, alternativ als Verbrennungsofen, ausgebildet. Der Ofen weist vorzugsweise ein Schienensystem auf, das dazu vorgesehen ist, den Gargutträger in dem Garraum zu halten und/oder zu tragen.

Unter einer "Ofeneinschubvorrichtung" soll insbesondere eine Vorrichtung verstanden werden, die dazu vorgesehen ist, mit einem Schienensystem eines Ofens zu interagieren.

Der Gargutträger weist insbesondere zumindest eine Auflagefläche auf, um Gargut zu tragen. Insbesondere ist die Auflagefläche von der Antihaftbeschichtung gebildet. Vorzugsweise ist der Gargutträger backblechförmig ausgestaltet. Insbesondere ist der Gargutträger plattenförmig, insbesondere mit pfannenartiger Vertiefung ausgebildet.

Die Antihaftbeschichtung ist, insbesondere zumindest in der Auflagefläche, dazu vorgesehen, Gargut, vorzugsweise Nahrung, unmittelbar zu tragen.

Der Gargutträger ist beispielsweise dazu vorgesehen, vorzugsweise beschädigungsfrei, auf Temperaturen von zumindest 180 °C, beispielsweise zumindest 200 °C, insbesondere zumindest 250 °, vorzugsweise zumindest 300 °C, erhitzt zu werden. Vorzugsweise ist der Gargutträger zumindest großteils, insbesondere zu mindestens 90 %, vorteilhaft zumindest 99 %, aus einem Metall oder einem Metallgemisch gebildet. Alternativ ist es denkbar, insbesondere für den Einsatz in einem Mikrowellenofen, dass der Gargutträger aus einem Kunststoff gefertigt ist.

Die Antihaftbeschichtung kann beispielsweise eine lösungsmittelbasierte Beschichtung, wie insbesondere PTFE/Teflon, eine wasserbasierte Beschichtung, oder eine Sol-Gel-Beschichtung, insbesondere auf Keramik-Basis, sein. Insbesondere ist die Antihaftbeschichtung dazu vorgesehen, ein Anbacken und/oder eine Anhaftung von Gargut, insbesondere an dem Gargutträger, zu vermeiden oder zumindest zu reduzieren, was eine Reinigung des Gargutträgers erleichtern kann.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Weiterhin wird vorgeschlagen, dass sich die Antihaftbeschichtung zumindest über eine gesamte nach außen gerichtete Oberfläche, also insbesondere Oberflächen mit einem Normalvektor, der von dem Gargutträger wegzeigt, vorzugsweise über eine gesamte Oberfläche des Gargutträgers, erstreckt. Hierdurch kann insbesondere ein Abblättern der Beschichtung ausgehend von einem Rand der Beschichtung vermieden werden.

Ferner kann die Schutzeinheit zumindest eine Sensorkontaktstelle, insbesondere eine Einstecköffnung, an dem Gargutträger aufweisen, die dazu vorgesehen ist, eine Temperatursonde aufzunehmen. Insbesondere ist die Temperatursonde dazu vorgesehen, eine Temperatur des Gargutträgers zu bestimmen. Insbesondere ist die Sensorkontaktstelle dazu vorgesehen, den Temperatursensor formschlüssig aufzunehmen. Insbesondere weist die Sensorkontaktstelle zumindest eine Kontaktfläche auf, die dazu vorgesehen ist, Wärme an die Temperatursonde zu übertragen. Hierdurch kann insbesondere eine Garguttemperatur ermittelt oder abgeschätzt werden. Weiterhin kann hierdurch ein verbesserter Garprozess erreicht werden. Weiterhin kann eine Überhitzung der Antihaftbeschichtung vermieden werden.

Weiterhin wird vorgeschlagen, dass die Sensorkontaktstelle durch den Gargutträger hindurchgehend ausgebildet ist und von zwei gegenüberliegenden Seiten des Gargutträgers aus zugänglich ist. Insbesondere weist die Sensorkontaktstelle ein Loch in dem Gargutträger auf. Insbesondere erstreckt sich das Loch entlang einer Lotlinie, die einen Winkel zu einer Hauptebene des Gargutträgers, die insbesondere in einem üblichen Gebrauchszustand horizontal ausgerichtet ist, aufweist, der kleiner ist als 80 °, beispielsweise kleiner ist als 70 °, insbesondere kleiner ist als 60 °. Es kann insbesondere eine hohe Anschlussflexibilität erreicht werden.

Weiterhin wird vorgeschlagen, dass die Sicherheitseinheit, insbesondere in einer Ausgestaltung der Ofenvorrichtung als System von einem Ofen und einer Ofeneinschubvorrichtung, eine Temperatursonde aufweist, die dazu vorgesehen ist, in die Einstecköffnung eingesteckt zu werden, um eine Temperatur des Gargutträgers zu ermitteln, und dass die Sicherheitseinheit eine Steuereinheit aufweist, die zumindest dazu vorgesehen ist, eine Heizleistung in Abhängigkeit von einer mittels der Temperatursonde ermittelten Temperatur zu begrenzen. Insbesondere ist die Temperatursonde drahtgebunden, alternativ drahtlos, mit der Steuereinheit verbunden. Insbesondere weist die Temperatursonde zumindest einen elektrischen oder elektro-optischen Messfühler auf. Insbesondere weist die Temperatursonde eine von der Steuereinheit separate Messelektronik auf, um Signale des Messfühlers in eine Temperaturkenngröße, insbesondere eine Temperatur, zu wandeln. Alternativ ist es möglich, dass die Steuereinheit unmittelbar Signale des Messfühlers erhält und diese einer Temperaturkenngröße zuordnet. Hierdurch kann insbesondere eine Garguttemperatur ermittelt oder abgeschätzt werden. Weiterhin kann hierdurch ein verbesserter Garprozess erreicht werden. Weiterhin kann eine Überhitzung der Antihaftbeschichtung vermieden werden.

Gemäß einer weiteren Ausgestaltung wird vorgeschlagen, dass der Gargutträger als Wendeträger ausgebildet ist und zwei Auflageflächen für Gargut aufweist, die auf sich gegenüberliegenden Seiten des Gargutträgers angeordnet sind. Hierdurch kann insbesondere eine hohe Einsatz-Flexibilität erreicht werden.

Ferner wird vorgeschlagen, dass eine der Auflageflächen als Riffelfläche ausgebildet ist und eine weitere der Auflageflächen als glatte, insbesondere ebene, Fläche ausgebildet ist. Hierdurch kann insbesondere eine hohe Einsatz-Flexibilität erreicht werden.

Weiterhin wird vorgeschlagen, dass die Schutzeinheit zumindest ein Trägerprofil aufweist, das mit dem Gargutträger verbunden ist und dazu vorgesehen ist, mit dem Schienensystem des Ofens zu interagieren, insbesondere um den Gargutträger in dem Ofen, insbesondere in dem Garraum, zu positionieren und/oder zu halten. Insbesondere kann so ein direkter Kontakt der Antihaftbeschichtung mit dem Schienensystem vermieden werden, was zu einem reduzierten Risiko eines Zerkratzens der Beschichtung führen kann. Insbesondere ist der Gargutträger frei von Kontaktpunkten, die dazu vorgesehen sind, mit dem Schienensystem zu interagieren. Unter "verbunden" soll insbesondere verstanden werden, dass das Trägerprofil und der Gargutträger Kräfte beliebiger Richtung aufeinander übertragen können. Vorteilhaft sind das Trägerprofil und der Gargutträger formschlüssig, kraftschlüssig und/oder stoffschlüssig miteinander verbunden. Insbesondere ist die Verbindung dazu vorgesehen, mit und/oder ohne Werkzeug durch den Endbenutzer gelöst und wiederhergestellt zu werden, insbesondere um eine Reinigung zu vereinfachen.

Vorzugsweise ist das Trägerprofil frei von, insbesondere irgendeiner, Antihaftbeschichtung. Beispielsweise weist das Trägerprofil eine kratzfeste Beschichtung auf. Die kratzfeste Beschichtung ist insbesondere eine Chrombeschichtung und/oder eine Anodisierung, insbesondere eine Eloxierung. Alternativ kann das Trägerprofil von einem intrinsisch kratzfesten Material, insbesondere Edelstahl, gebildet sein.

Insbesondere ist das Trägerprofil mit dem Gargutträger verschraubt. Insbesondere weist der Gargutträger zumindest einen Längsschlitz auf, in den das Trägerprofil eingeschoben ist. Beispielsweise weisen der Gargutträger und das Trägerprofil Schraublöcher, insbesondere quer zum Längsschlitz und im Bereich des Längsschlitzes, auf, die mit einer Schraube versehen werden, um das Trägerprofil mit dem Gargutträger zu verbinden. So kann insbesondere eine einfach zu lösende, aber auch sichere Verbindung erreicht werden. Alternativ kann das Trägerprofil auch zu einer dauerhaften Verbindung mit dem Gargutträger vorgesehen sein. Insbesondere könnte das Trägerprofil Rastelemente aufweisen, die dazu vorgesehen sind, in Rastelemente des Gargutträgers einzurasten.

Ferner wird vorgeschlagen, dass das Trägerprofil zumindest ein Formschlusselement aufweist, das dazu vorgesehen ist, mit einem Formschlusselement einer Teleskopschiene des Schienensystems einen Formschluss zu bilden, so dass ein Herausziehen des Gargutträgers, zu einem Auszug der Teleskopschiene führt. Beispielsweise weist die Teleskopschiene Rastfedern auf und das Trägerprofil weist Rastschlitze auf, die dazu vorgesehen sind, die Rastfedern aufzunehmen. Es kann insbesondere eine einfache Handhabung erreicht werden.

Gemäß einer Weiterbildung wird vorgeschlagen, dass das Trägerprofil zumindest einen Abstandhalter aufweist, der zumindest bezüglich einer Schmalseite des Gargutträgers und in montiertem Zustand über den Gargutträger hinausragt. Insbesondere ragt der Abstandträger zumindest 0,3 mm, insbesondere zumindest 0,5 mm, vorteilhaft zumindest 0,7 mm, zumindest bezüglich der Schmalseite des Gargutträgers, insbesondere in alle Richtungen über den Gargutträger, hinaus. Insbesondere weist das Trägerprofil ein T-Profil auf und der Flansch des T-Profils bildet den Abstandhalter. Es kann insbesondere eine erhöhte Sicherheit gegen Zerkratzen der Antihaftbeschichtung, insbesondere beim Aufstellen auf eine Arbeitsplatte oder Herdplatte, erreicht werden.

Weiterhin kann das Trägerprofil eine Länge aufweisen, die größer ist als eine Tiefe des Gargutträgers, so dass längsseitige Enden des Trägerprofils in montiertem Zustand über den Gargutträger hinausragen. Auf diese Weise kann insbesondere Bodenfreiheit bei hochkanter Aufstellung, insbesondere bei einer Lagerung oder Trocknung, erreicht werden. Weiterhin kann vermieden werden, dass der Gargutträger an eine Wandung der Ofenmuffel oder an die Ofentür anstößt.

Die Ofenvorrichtung soll hierbei nicht auf die oben beschriebene Anwendung und Ausführungsform beschränkt sein. Insbesondere kann die Ofenvorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen erfindungsgemäßen Ofen in einer schematischen Ansicht,
- Fig. 2: eine erfindungsgemäße Ofenvorrichtung in einer schematischen Perspektivansicht,
- Fig. 3: eine Detailansicht der Ofenvorrichtung aus Fig. 2.
- Fig. 4a: die erfindungsgemäße Ofenvorrichtung aus Fig. 2 in schematischer Ansicht auf eine erste Auflagefläche,
- Fig. 4b: die erfindungsgemäße Ofenvorrichtung aus Fig. 2 in schematischer Ansicht auf eine zweite Auflagefläche,
- Fig. 5a: eine schematische perspektivische Schnittdarstellung der Ofenvorrichtung aus Fig. 2,
- Fig. 5b: einen Detailausschnitt auf Figur 5a in schematischer Ansicht,
- Fig. 6a: eine erfindungsgemäße Ofenvorrichtung in einer schematischen Aufsicht,
- Fig. 6b: eine schematische Detaildarstellung der Ofenvorrichtung gemäß Fig. 6a und
- Fig. 6c: eine schematische Seitenansicht der Ofenvorrichtung gemäß Fig. 6a.

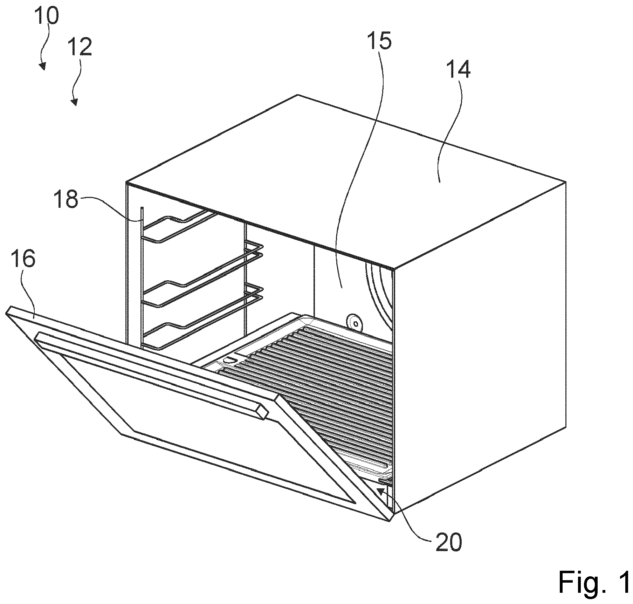

Figur 1 zeigt ein System 10 aus einem Ofen 12 und einer Ofeneinschubvorrichtung 20. Der Ofen 12 ist als Backofen ausgebildet. Der Ofen 12 weist eine Ofenmuffel 14 auf. Die Ofenmuffel 14 weist eine Rückwand 15 auf. Der Ofen 12 weist weiterhin eine Ofentür 16 auf. Die Ofentür 16 und die Ofenmuffel 14 begrenzen gemeinsam einen Garraum. Der Ofen 12 weist ein Schienensystem 18 auf. Das Schienensystem 18 ist in der Ofenmuffel 14 angeordnet. Die Ofeneinschubvorrichtung 20 ist backblechartig ausgebildet.

Das Schienensystem 18 weist eine Anzahl (hier drei dargestellt) von klassischen Schienen und eine Anzahl (hier eine dargestellt) von Teleskopschienen auf. Eine Anzahl der jeweiligen Schienen kann je nach Anwendungsfall frei gewählt werden.

Die Ofeneinschubvorrichtung 20 bildet im vorliegenden Beispiel gemeinsam mit Teilen des Ofens 12, alternativ mit dem gesamten Ofen 12, eine Ofenvorrichtung. Gemäß alternativen Ausgestaltungen ist die Ofenvorrichtung ausschließlich von der Ofeneinschubvorrichtung 20 gebildet.

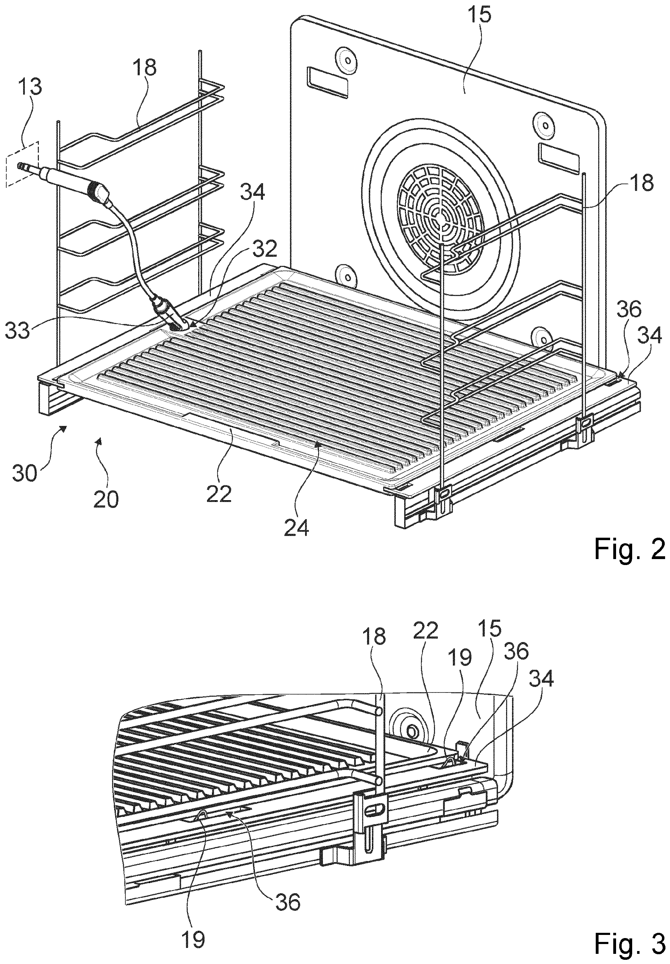

Figur 2 zeigt die Ofenvorrichtung aus Figur 1 ohne die Ofenmuffel 14 und die Ofentür 16. Die Ofeneinschubvorrichtung 20 weist einen Gargutträger 22 auf. Der Gargutträger 22 weist eine Antihaftbeschichtung 24 auf.

Der Gargutträger 22 ist plattenförmig ausgebildet. Der Gargutträger 22 weist eine rechteckige oder im Wesentlichen rechteckige Form auf. Der Gargutträger 22 ist als Wendeträger ausgebildet und weist zwei Auflageflächen für Gargut auf. Die Auflageflächen sind auf sich gegenüberliegenden Seiten des Gargutträgers 22 angeordnet.

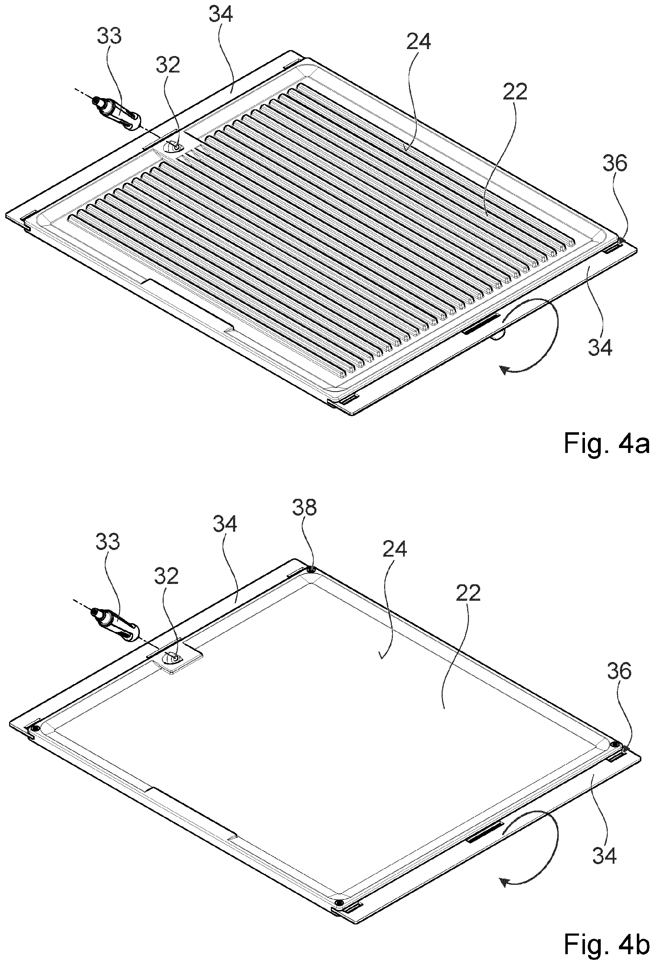

Eine der Auflageflächen ist als Riffelfläche ausgebildet (vgl. Fig. 4a). Eine weitere der Auflageflächen ist als glatte, insbesondere ebene, Fläche ausgebildet (vgl. Fig. 4b). Die Auflageflächen sind jeweils zum Rand des Gargutträgers 22 hin von einer Erhöhung umgeben.

Der Gargutträger 22 besteht aus einem Aluminiumgrundkörper mit einer keramischen Antihaftbeschichtung 24. Der Aluminiumgrundkörper kann als Gussteil oder als Schmiedeteil ausgebildet sein. Alternativ kann der Gargutträger einen Grundkörper aus Kohlenstoffstahl, Edelstahl oder einem anderen geeigneten Material aufweisen, der insbesondere als Gussteil, Tiefziehteil oder Schmiedeteil ausgebildet ist. Gemäß einer weiteren Alternative ist der Gargutträger aus einem Blech geformt.

Gemäß einer weiteren Alternative weist der Gargutträger lediglich eine einzelne Ablagefläche oder lediglich Ablageflächen auf einer gleichen Seite des Gargutträgers auf.

Die Ofeneinschubvorrichtung 20 weist weiterhin eine Schutzeinheit 30 auf, die dazu vorgesehen ist, die Antihaftbeschichtung 24 während eines Gebrauchs, insbesondere vor einer Beschädigung, zu schützen. Die Antihaftbeschichtung 24 erstreckt sich über eine gesamte Oberfläche des Gargutträgers 22.

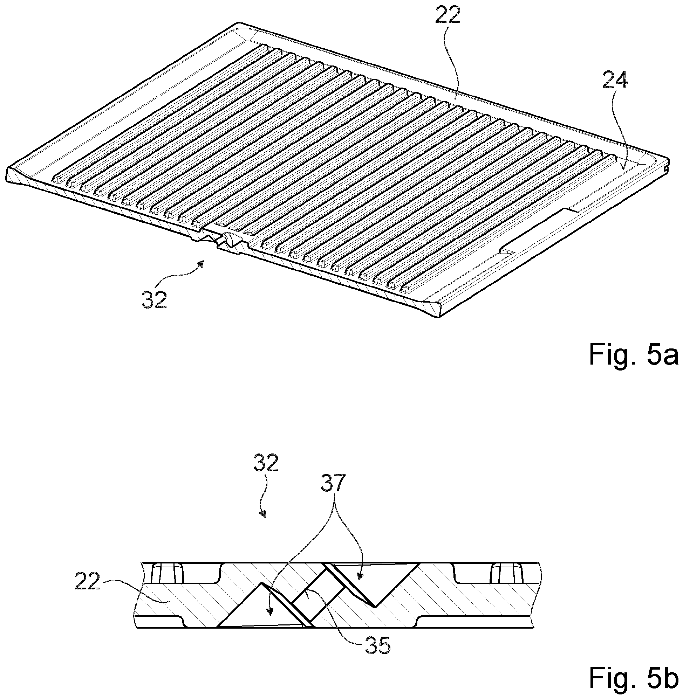

Die Schutzeinheit 30 weist eine Sensorkontaktstelle 32 an dem Gargutträger 22 auf, die dazu vorgesehen ist, eine Temperatursonde 33 aufzunehmen. Die Sensorkontaktstelle 32 ist als Einstecköffnung ausgebildet (vgl. auch Fig. 5a und Fig. 5b). Die Sensorkontaktstelle 32 ist durch den Gargutträger 22 hindurchgehend ausgebildet. Die Sensorkontaktstelle 32 weist eine Kontaktfläche 35 auf, die von zwei gegenüberliegenden Seiten des Gargutträgers 22 aus zugänglich ist. Die Sensorkontaktstelle 32 ist als Loch ausgebildet, das den Gargutträger 22 in einem Winkel von 45 ° durchzieht. Die Sensorkontaktstelle 32 ist in einem Randbereich des Gargutträgers 22 angeordnet. Die Kontaktfläche 35 ist von einer Innenfläche des Lochs gebildet. Das Loch weist ein Mittelstück mit geringem Durchmesser zur Bereitstellung der Kontaktfläche 35 und Endstücken 37 mit größerem Durchmesser zur Aufnahme und Halterung eines Kopfes der Temperatursonde 33 auf.

Die Ofenvorrichtung weist weiterhin die Temperatursonde 33 auf, die dazu vorgesehen ist, in die Sensorkontaktstelle 32 eingesteckt zu werden, um eine Temperatur des Gargutträgers 22 zu ermitteln. Der Ofen 12 weist eine Steuereinheit 13 auf, die zumindest dazu vorgesehen ist, eine Heizleistung in Abhängigkeit von einer mittels der Temperatursonde 33 ermittelten Temperatur zu begrenzen. Die Steuereinheit 13 kann dazu vorgesehen sein, bei Überschreiten einer Grenztemperatur, eine Heizleistungszufuhr in den Garraum zu reduzieren oder zu unterbrechen. Die Grenztemperatur kann z.B. 50 K unter einer maximalen Betriebstemperatur der Antihaftbeschichtung 24 liegen, die insbesondere einen zerstörungsfreien Betrieb der Antihaftbeschichtung 24 erlaubt. Hierdurch kann vermieden werden, dass eine tatsächliche Temperatur des Gargutträgers 22 durch Messungenauigkeit, lokale Temperaturunterschiede und/oder latenten Wärmeeintrag, insbesondere eines Strahlungsheizkörpers, die maximale Betriebstemperatur übersteigt. Beispielsweise beträgt die maximale Betriebstemperatur 300 °C.

Die Schutzeinheit 30 weist zwei Trägerprofile 34 auf. Die Trägerprofile 34 sind mit dem Gargutträger 22 verbunden und dazu vorgesehen, mit dem Schienensystem 18 des Ofens 12 zu interagieren. Die Trägerprofile 34 sind frei von der und irgendeiner anderen Antihaftbeschichtung. Die Trägerprofile 34 weisen eine kratzfeste Beschichtung auf. Die kratzfeste Beschichtung ist eine Chrombeschichtung. Die Trägerprofile 34 basieren hierbei auf Kohlenstoffstahl. Die Trägerprofile 34 weisen eine Dicke von 3 mm auf.

Der Gargutträger 22 weist Nuten auf, die dazu vorgesehen sind, die Trägerprofile 34 teilweise aufzunehmen. Die Nuten erstrecken sich jeweils entlang einer Schmalseite des Gargutträgers 22. Die Nuten sind an gegenüberliegenden Seiten des Gargutträgers 22 eingebracht. Die Nuten erstecken sich voneinander fort. Die Trägerprofile 34 sind in den Nuten angeordnet.

Die Trägerprofile 34 sind mit dem Gargutträger 22 verschraubt (vgl. insbesondere Schrauben 38 in Figur 4b). Verwendete Schrauben 38 sind hierbei insbesondere Senkkopfschrauben und Schraublöcher im Gargutträger 22 sind insbesondere mit einem Konus versehen, der einem Konus der Senkkopfschrauben entspricht, so dass Schraubköpfe der Schrauben 38 bündig mit dem Gargutträger 22 abschließen.

Die Trägerprofile 34 weisen jeweils drei Formschlusselemente 36 auf, die dazu vorgesehen sind, mit Formschlusselementen 19 einer Teleskopschiene des Schienensystems 18 einen Formschluss zu bilden, so dass ein Herausziehen des Gargutträgers 22 zu einem Auszug der Teleskopschiene führt. Die Formschlusselemente 19 der Teleskopschiene sind als Drahtfedern ausgebildet. Die Formschlusselemente 36 der Trägerprofile 34 sind als Schlitze ausgebildet. Ein Formschluss zwischen den Formschlusselementen 36 der Trägerprofile 34 und den Formschlusselementen 19 der Teleskopschiene oder der Teleskopschienen kann insbesondere durch Anheben des Gargutträgers 22 und/oder der Trägerprofile 34 nach einem Auszug des Gargutträgers 22 und/oder der Trägerprofile 34 aus dem Garraum gelöst werden.

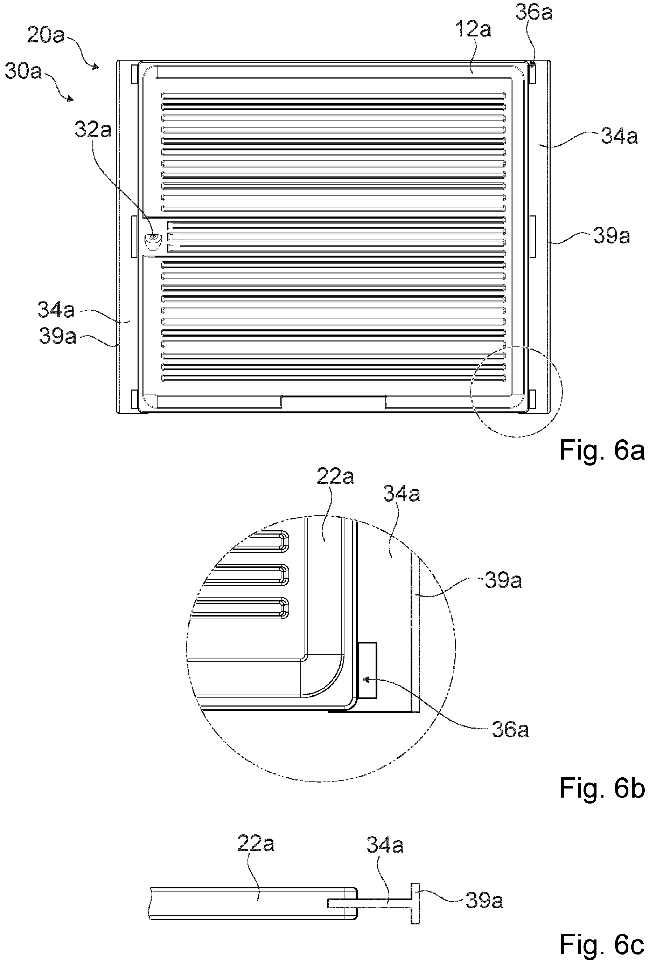

Die Trägerprofile 34 weisen jeweils eine Länge auf, die größer ist als eine Tiefe des Gargutträgers 22, so dass längsseitige Enden der Trägerprofile 34 in montiertem Zustand über den Gargutträger 22 hinausragen (vgl. insbesondere Fig. 6b).

Gemäß weiteren Ausgestaltungen weist die Ofeneinschubvorrichtung lediglich ein einzelnes Profilelement auf, das sich insbesondere U-förmig, entlang zumindest drei Seiten des Gargutträgers erstreckt. Weiterhin sind Ausgestaltungen denkbar, gemäß denen mehrere Profilelemente je Seite vorgesehen sind.

Von mehrfach vorhandenen Objekten ist in den Figuren jeweils lediglich eines mit einem Bezugszeichen versehen.

In Figuren 6a, 6b und 6c ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 2 verwiesen werden kann. Zur Unterscheidung der Ausführungsbeispiele ist der Buchstabe a an die Bezugszeichen des Ausführungsbeispiels gemäß Figuren 6a, 6b und 6c angehängt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 5b verwiesen werden.

Die Ofenvorrichtung gemäß Figuren 6a, 6b und 6c weist Trägerprofile 34a auf, die jeweils einen Abstandhalter 39a aufweisen. Der Abstandhalter 39a ragt zumindest bezüglich einer Schmalseite, also bezüglich einer Dicke, des Gargutträgers 22a und in montiertem Zustand über den Gargutträger 22a hinaus. Eine solche Ausgestaltung eignet sich besonders in Zusammenhang mit einem Schienensystem, das lediglich Teleskopschienen aufweist.

### Bezugszeichen

- 10: System
- 12: Ofen
- 13: Steuereinheit
- 14: Ofenmuffel
- 15: Rückwand
- 16: Ofentür
- 18: Schienensystem
- 19: Formschlusselement
- 20: Ofeneinschubvorrichtung
- 22: Gargutträger
- 22a: Gargutträger
- 24: Antihaftbeschichtung
- 30: Schutzeinheit
- 32: Sensorkontaktstelle
- 33: Temperatursonde
- 34: Trägerprofil
- 35: Kontaktfläche
- 36: Formschlusselement
- 38: Schraube
- 39: Abstandhalter

## Patentansprüche

1. Ofenvorrichtung, insbesondere Ofeneinschubvorrichtung, mit zumindest einem Gargutträger (22), der eine Antihaftbeschichtung (24) aufweist, **gekennzeichnet durch** eine Schutzeinheit (30), die dazu vorgesehen ist, die Antihaftbeschichtung (24) während eines Gebrauchs zu schützen.

2. Ofenvorrichtung nach Anspruch 1, **dadurch gekennzeichnet, dass** die Antihaftbeschichtung (24) sich über eine gesamte Oberfläche des Gargutträgers (22) erstreckt.

3. Ofenvorrichtung nach Anspruch 1 oder 2, **dadurch gekennzeichnet, dass** die Schutzeinheit (30) zumindest eine Sensorkontaktstelle (32), insbesondere eine Einstecköffnung, an dem Gargutträger (22) aufweist, die dazu vorgesehen ist, eine Temperatursonde (33) aufzunehmen.

4. Ofenvorrichtung nach Anspruch 3, **dadurch gekennzeichnet, dass** die Sensorkontaktstelle (32) durch den Gargutträger (22) hindurchgehend ausgebildet ist und von zwei gegenüberliegenden Seiten des Gargutträgers (22) aus zugänglich ist.

5. Ofenvorrichtung nach einem der Ansprüche 3 oder 4, **gekennzeichnet durch** die Temperatursonde (33), die dazu vorgesehen ist, in die Sensorkontaktstelle (32) eingesteckt zu werden, um eine Temperatur des Gargutträgers (22) zu ermitteln, und durch eine Steuereinheit (13), die zumindest dazu vorgesehen ist, eine Heizleistung in Abhängigkeit von einer mittels der Temperatursonde (33) ermittelten Temperatur zu begrenzen.

6. Ofenvorrichtung nach einem der vorhergehenden Ansprüche, **dadurch gekennzeichnet, dass** der Gargutträger (22) als Wendeträger ausgebildet ist und zwei Auflageflächen für Gargut aufweist, die auf sich gegenüberliegenden Seiten des Gargutträgers (22) angeordnet sind.

7. Ofenvorrichtung nach Anspruch 6, **dadurch gekennzeichnet, dass** eine der Auflageflächen als Riffelfläche ausgebildet ist und eine weitere der Auflageflächen als glatte, insbesondere ebene, Fläche ausgebildet ist.

8. Ofenvorrichtung nach einem der vorhergehenden Ansprüche, **dadurch gekennzeichnet, dass** die Schutzeinheit (30) zumindest ein Trägerprofil (34) aufweist, das mit dem Gargutträger (22) verbunden ist und dazu vorgesehen ist, mit einem Schienensystem (18) eines Ofens (12) zu interagieren.

9. Ofenvorrichtung nach Anspruch 8, **dadurch gekennzeichnet, dass** das Trägerprofil (34) frei ist von einer Antihaftbeschichtung.

10. Ofenvorrichtung nach Anspruch 8 oder 9, **dadurch gekennzeichnet, dass** das Trägerprofil (34) mit dem Gargutträger (22) verschraubt ist.

11. Ofenvorrichtung nach einem der Ansprüche 8 bis 10, **dadurch gekennzeichnet, dass** das Trägerprofil (34) eine kratzfeste Beschichtung aufweist.

12. Ofenvorrichtung nach einem der Ansprüche 8 bis 11, **dadurch gekennzeichnet, dass** das Trägerprofil (34) zumindest ein Formschlusselement (36) aufweist, das dazu vorgesehen ist, mit einem Formschlusselement (19) einer Teleskopschiene des Schienensystems (18) einen Formschluss zu bilden, so dass ein Herausziehen des Gargutträgers (22) zu einem Auszug der Teleskopschiene führt.

13. Ofenvorrichtung nach einem der Ansprüche 8 bis 12, **dadurch gekennzeichnet, dass** das Trägerprofil (34) zumindest einen Abstandhalter (39) aufweist, der zumindest bezüglich einer Schmalseite des Gargutträgers (22) und in montiertem Zustand über den Gargutträger (22) hinausragt.

14. Ofenvorrichtung nach einem der Ansprüche 8 bis 13, **dadurch gekennzeichnet, dass** das Trägerprofil (34) eine Länge aufweist, die größer ist als eine Tiefe des Gargutträgers (22), so dass längsseitige Enden des Trägerprofils (34) in montiertem Zustand über den Gargutträger (22) hinausragen.

15. Ofen, insbesondere Backofen, mit einer Ofenvorrichtung nach einem der vorhergehenden Ansprüche.
